# EUROPÄISCHE PATENTANMELDUNG

(11) **EP 1 562 252 A1**
(43) Veröffentlichungstag der Anmeldung: **10.08.2005**
(21) Anmeldenummer: 04100434.2
(22) Anmeldetag: 05.02.2004
(51) Int. Cl.: H01M 10/44, B60R 16/02, H02J 7/14, H02J 7/00

(54) **Energieversorgungssystem**

(71) Anmelder: Ford Global Technologies, LLC, A subsidary of Ford Motor Company, Dearborn, MI 48126 (US)
(72) Erfinder: Gaedt, Lutz Peter, 52499, Baesweiler (DE); Leyten, Max Johan Adriaan, 6291EM, Vaals (NL)
(74) Vertreter: Drömer, Hans-Carsten, Dr.-Ing.

(57) **Zusammenfassung**

Die Erfindung bezieht sich auf ein Energieversorgungssystem 10 für Fahrzeuge mit einem Zwei- Spannungs- Speicherungs- System, umfassend ein elektrisches 14/42 V Zwei- Spannungs- System 11 mit einer im wesentlichen drei wechselweise schaltbare 12- Volt Batterien 13,14,15 aufweisenden 36 V-Batterie 12, von denen eine als erster 12- Volt - Teil 16 zwischen Erde und 12 V schaltbar ist, und mit jeweiligen Einrichtungen zur Energiespeicherung für das 14 V- und das 42 V-System, wobei die 36 V-Batterie 12 die Einrichtung zur Energiespeicherung für das 12 V- System und die Einrichtung zur Energiespeicherung für das 42 V- System umfaßt. Es ist dabei erfindungsgemäß vorgesehen, daß das Energieversorgungssystem 10 eine intelligente Umschaltregelung 17 zur Beschaltung jeder 12 V- Batterie 13,14,15 der 36 V- Batterie 12 als erster 12 V- Teil 16 zwischen Erde und 12 V umfaßt.

## Beschreibung

Die Erfindung bezieht sich auf ein Energieversorgungssystem für Fahrzeuge mit einem Zwei- Spannungs- Speicherungs- System, umfassend ein elektrisches 14/42 V Zwei- Spannungs- System mit einer im wesentlichen drei wechselweise schaltbare 12- Volt Batterien aufweisenden 36 V-Batterie, von denen eine als erster 12- Volt-Teil zwischen Erde und 12 V schaltbar ist, und mit jeweiligen Einrichtungen zur Energiespeicherung für das 14 V- und das 42 V- System, wobei die 36 V-Batterie die Einrichtung zur Energiespeicherung für das 12 V- System und die Einrichtung zur Energiespeicherung für das 42 V- System umfaßt.

Aus dem Stand der Technik sind verschiedene Energieversorgungssysteme für Fahrzeuge mit einem Zwei- Spannungs - S peicherungs- System bekannt, die ein elektrisches 14/42 V Zwei- Spannungs - System umfassen. Es sind die bekannten elektrischen 14/42 V- Zwei- Spannungs- Systeme entwickelt worden, um die Überführung von einem konventionellen elektrischen 14 V- System zu einem elektrischen System mit einem 42 V- Niveau zu erleichtern. Ein Nachteil der Einführung eines elektrischen Energieversorgungssystem mit einem Zwei-Spannungs- System ist der Bedarf an mehr als einer Einrichtung zur Energiespeicherung, um die Energie für hohe Energie- Übergangs - Ladungen zu speichern.

In einem konventionellen elektrischen 14 V- System wird eine einzelne 12 V- Batterie als Einrichtung zur Energiespeicherung verwendet. In vielen Anwendungen für elektrische 14/42 V- Zwei - Spannungs - Systeme ist die Verwendung von zwei separaten Einrichtungen zur Energiespeicherung erforderlich, um Anordnungen mit Eigenschaften von zwei Batterien zu ermöglichen. Ausgehend von diesen bekannten Lösungen ist es wünschenswert, ein Energieversorgungssystem für Fahrzeuge mit einem Zwei- Spannungs- Speicherungs- System bereitzustellen, mit dem eine Kostenreduzierung erreicht wird, Gewicht gespart wird, die Unterbringungsflexibilität verbessert und eine kurzzeitige Ausgabe hoher Energie für den Startvorgang bereitgestellt wird. Die gewünschte Lösung soll dabei möglichst ohne die Verwendung eines Zwei- Spannungs- Ausgangs- Generatoren oder eines 42/12 V-Gleichstromumwandlers erfolgen, abhängig von der gesamten elektrischen Ladungsanforderung auf der 14 V- Seite des Systems.

Das Grundkonzept dazu ist die Verwendung einer einzelnen Batterie, die es ermöglicht, eine für einen Startvorgang erforderliche Energie unter allen Umständen bereitzustellen. In Ergänzung dazu soll zu einer parallelen Anordnung umgeschaltet werden können, wenn eine hohe Batteriekapazität erforderlich ist. Die bekannten Systeme sehen dieses Konzept allerdings nicht bei einer Lösung mit einem Zwei-Spannungs- Speicherungs- System vor.

Die der vorliegenden Erfindung zugrundeliegende Grundidee ist, eine elektrische 12 V- Energie- Speicherung und Speicher- Funktionalität in eine 36 V- Haupt-Einrichtung zur Energiespeicherung einzubeziehen. Durch ein solches Vorgehen würde die Notwendigkeit einer separaten 12 V- Batterie entfallen und dadurch der erforderliche Unterbringungsraum entfallen und dadurch Gewicht gespart. Idealerweise würde der Unterbringungsraumbedarf einer 36 V- Einrichtung zur Energiespeicherung im Vergleich mit dem Unterbringungsraumbedarf einer 36 V-Batterie in einer Zwei- Batterien- Anordnung gleichbleiben. Weil eine 36 V- Batterie als drei in Serie geschaltete 12 V- Batterien angesehen werden kann, könnte die 12 V- Energie- Speicher- Funktion theoretisch durch das Herausführen dreier positiver Batteriepole (12 V, 24 V, 36 V) sowie der Batteriemasse realisiert werden.

Bei der Ausbildung einer derartigen Anordnung ergeben sich allerdings zwei Probleme. Zum einen werden Differenzen in den Ladungszuständen über die verschiedenen Zellen der Batterie auftreten, weil die Batterie auf einem 42 V- Niveau aufgeladen wird und zusätzlich Energie von den Zellen entzogen wird, die dem 12 V-Teil der elektrischen Energie- Speicherung dessen Funktionalität verleihen. Zum zweiten werden durch dieses zusätzliche Entladen dieser Zellen durch den 14 V- Teil des Energienetzes (wenn kein Gleichstromumwandler verfügbar ist) die Batteriezellen ein ungleiches Arbeiten erfahren und sich dadurch nach einer Weile eine ungleiche Alterungsverteilung ergeben. Da dies die allgemeine Lebensdauererwartung der Batterie verkürzen wird, wird dadurch eine Veränderung in diesem Ansatz für das elektrische Zwei- Spannungs- Energieversorgungssystem erforderlich.

Um nun eine Alterung nur eines Teiles der Zellen der 36 V- Batterie zu vermeiden, ist es erforderlich, auch das Entziehen von elektrischer Energie aus der Batterie über die verschiedenen Zellen zu verteilen. Es wird deshalb nachfolgend die 36 V-Batterie als drei separate 12 V- Teile in einem gemeinsamen Gehäuse angesehen. Dabei ist zu erreichen, sicherzustellen, daß jeder 12 V- Teil wechselweise geschaltet wird, um die 12 V- Energie- Speicher- Funktionalität zusätzlich als Teil des elektrischen 36 V- Energieversorgungssystems auszubilden.

Es ist dazu aus der EP 1 295 757 A2 ein Energie- Versorgungssystem für Fahrzeuge bekannt mit einer Energiequelle zum Zuführen einer elektrischen Energie zu einer Vielzahl von elektrischen Ladungsgruppen mit wechselseitig unterschiedlichen Spannungen. Dabei bilden eine Vielzahl von Ladungselementen jede elektrische Ladungsgruppe, und es sind eine Vielzahl von Ausgabemitteln vorgesehen, um die elektrische Energie für jede vorgegebene Spannung als eine Mittelspannung von der Energiequelle auszugeben. Es sind dabei die Vielzahl von Ausgabemitteln in der Energiequelle angeordnet, wobei die Vielzahl von Ladungselementen in jeder Ladungsgruppe in einige Blöcke geteilt sind und mit jedem Ausgabeelement verbunden sind, um zu erreichen, daß eine elektrische Energie, die gleichzeitig von jedem geteilten Block verbraucht wird, im wesentlichen gleich wird. Zusätzlich werden einzelne der in der Ladungsgruppe geteilten Blöcke derart gesetzt, daß sie mehr Ladung als die anderen Blöcke aufweisen. Dieses Energie-Versorgungssystem für Fahrzeuge soll den Ladungsausgleich der Batterie verbessern, ohne dabei eine spezielle Batterie-Anzeige- und Überwachungs-Einrichtung oder einen Gleichstromumwandler verwenden zu müssen, es wird dabei die gewünschte Mittelspannung von der Hochspannungsbatterie ausgegeben.

Bei einer abgewandelten Ausführungsform dieses Energieversorgungssystems für Fahrzeuge umfaßt das System eine Energiequelle zum Zuführen einer elektrischen Energie zu einer elektrischen Ladungsgruppe mit einer niedrigen Spannung und zu einer elektrischen Ladungsgruppe mit einer hohen Spannung. Die Energiequelle umfaßt dabei endseitige Ausgangsanschlüsse, die mit der elektrischen Ladungsgruppe mit einer hohen Spannung verbunden sind, sowie eine Vielzahl von mittleren Ausgangsanschlüssen, um die elektrische Energie für die elektrische Ladungsgruppe mit der niedrigen Spannung als eine Mittelspannung von der Energiequelle abzugeben. Es ist dabei die elektrische Ladungsgruppe mit der niedrigen Spannung in eine Vielzahl von Blöcken geteilt, wobei diese entsprechend mit jedem Ausgangsanschluß der Ausgangsanschlüsse und der Vielzahl von mittleren Ausgangsanschlüssen verbunden sind, um zu ermöglichen, daß eine von jedem Block gleichzeitig verbrauchte elektrische Energie im wesentlichen gleich wird und es ist weiterhin einer der in der elektrischen Ladungsgruppe mit der niedrigen Spannung geteilten Blöcke derart gesetzt, daß dieser mehr Ladung aufweist als die anderen Blöcke.

Das in dieser Druckschrift beschriebene Energieversorgungssystem geht von der folgenden Problemstellung aus:

Eine Standard- Batterie mit 12 V (14 V Energie- System) ist für Fahrzeuge viele Jahre verwendet worden. Allerdings ist durch die Hinzunahme neuer Funktionen wie elektrischer Einrichtungen zur Starthilfe für einen Motor und zur Unterstützung von dessen Beschleunigung, wie elektrisch unterstütztes Lenken, elektrische Bremsen und/ oder elektrische Fahrwerkdämpfungssysteme, die in das betreffende Fahrzeug integriert werden sollen, bei den verwendeten 12 V- Batterien die elektrische Kapazität nicht ausreichend, um diese Funktionen zu unterstützen. Deshalb wurde versucht, diese neuen Funktionen mit einer hohen Spannung und hoher elektrischer Leistung zu realisieren, sowie eine effiziente Erzeugung von elektrischer Energie und damit eine effektive Verwendung derselben, wobei eine Energiequelle eines elektrischen Systems für ein Fahrzeug an eine 36 V- Batterie (an ein 42 V- Energie-System) angeschlossen werden soll, die dreimal soviel Spannung aufweist wie die vorherigen Systeme. Allerdings bedarf es unter technischen und wirtschaftlichen Aspekten eines hohen Aufwandes, nur das 42 V- Energie- System zur Verfügung zu haben, das mit allen an dem Fahrzeug befindlichen elektrischen Einrichtungen zusammenwirken soll, wie z.B. den Ventilen für eine Niedrigspannung oder den Steuereinrichtungen mit einer elektronischen Steuereinheit. Außerdem ist bei einer solchen Lösung die gesamte Ladungsstärke zu gering für eine 42 V- Ladungsgruppe. Dadurch wurde es notwendig, ein Zwei- Spannungs- System in Form eines 12/42 V-Spannungssystems zu verwenden. Bei den bekannten Lösungen ergab sich dabei allerdings durch die Überlagerung der Ladungsströme des 36 V- Batterieteiles und des 12 V- Batterieteiles ein Problem dahingehend, daß der 12 V- Batterieteil nicht nur zu stark entladen wird, sondern daß durch dieses Entladen des 12 V-Batterieteiles eine Anzeige und Steuerung der Ladungsströme z.B. über einen kostenaufwendigen Gleichstromumwandler erforderlich wird. Zur Umgehung dieses Problems ist die zuvor beschriebene Ausbildung des beschriebenen Energieversorgungssystems vorgesehen.

Bei einer 36 V- Batterie werden also drei separate 12 V- Teile in einem gemeinsamen Gehäuse vorgesehen, wobei jeder 12 V- Teil wechselweise geschaltet wird, um die 12 V- Energie- Speicher- Funktionalität zusätzlich als Teil des elektrischen 36 V- Energie- Speicherungs- Systems auszubilden. In Kombination mit einer intelligenten Umschaltregelung, die z.B. über eine Verwendung von MOS-FET- Schaltelementen oder Relais- Schaltelementen realisiert werden kann, ist es nun möglich, die 36 V- Batterie als eine elektrische Energie- Speicher - Einrichtung für den 42 V- und den 14 V- Teil des elektrischen Systems des Fahrzeuges zu verwenden, ohne Ladungsdifferenzen oder Alterungsprobleme zu haben. Es kann dabei über ein Batterie-Anzeige- und Überwachungs-System sichergestellt werden, daß das Umschalten zwischen den drei Batterieteilen in Abhängigkeit von deren Ladezustand gesteuert wird.

Allerdings gestaltet sich eine derartige Anordnung bei der Anwendung von elektrischen Zwei- Spannungs - Energie - Speicherungs - Systemen innerhalb eines elektrischen Zwei- Spannungs - Systems schwierig. Der Grund dafür liegt in der gemeinsamen Erdung, die in den heutigen Fahrzeugen vorliegt. Bei dieser Konfiguration wird nämlich die 36 V- Batterie - Erdung mit dem Fahrzeugfahrwerk verbunden. Wenn die elektrische 12 V- Energie- Speicherungs- Funktionalität hier bei dem zweiten 12 V- Teil der 36 V- Batterie (24 V- 12 V) vorgesehen würde, würde der erste 12 V- Teil der 36 V- Batterie kurz geschlossen. Dies erfordert eine neue Kabelbaum- Anordnung für jede 14 V- Ladung, weil diese nicht direkt mit dem Fahrzeugfahrwerk verbunden werden kann. Eine solche Lösung ist aus Kosten- und Einheitlichkeitsgründen nicht erwünscht, es ist vielmehr eine Verbesserung dieser Lösungsmöglichkeit wünschenswert.

Ausgehend von diesen bekannten Energieversorgungssysteme, liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, wobei insbesondere die erwähnten Ladungdifferenzen und Alterungsprobleme vermieden werden sollen, weiterhin soll insbesondere das zuvor beschriebene Kurzschlußproblem verhindert werden. Die gewünschte Anordnung soll dabei auch einfach und kostengünstig herstellbar sein und hinsichtlich der Lebensdauer und der Zuverlässigkeit den bestehenden Anforderungen entsprechen.

Diese Aufgabe wird erfindungsgemäß dadurch gelöst, daß das Energieversorgungssystem eine intelligente Umschaltregelung zur Beschaltung jeder 12 V- Batterie der 36 V- Batterie als erster 12 V- Teil zwischen Erde und 12 V umfaßt. Auf diese Weise wird erstmalig mit einfachen Mitteln die Möglichkeit geschaffen, ein Energieversorgungssystem bereitzustellen, daß unter Vermeidung der zuvor beschriebenen Nachteile mit einem Zwei- Spannungs- Energie-Speicherungs- System innerhalb eines elektrischen Zwei- Spannungs - Systems ausgestattet ist. Es werden dabei insbesondere die erwähnten Ladungsdifferenzen und Alterungsprobleme sowie auch das beschriebene Kurzschlußproblem vermieden. Die erfindungsgemäße Anordnung ist auch einfach und relativ kostengünstig herstellbar, und weist eine hohe Zuverlässigkeit und Lebensdauer auf.

Bei der bevorzugten Ausführungsform der vorliegenden Erfindung umfaßt die intelligente Umschaltregelung des Energieversorgungssystems eine Anzahl von Mehrfach- MOS - FET- Schaltelementen. Mit diesen Schaltelementen läßt sich das erfindungsgemäße Energieversorgungssystem mit einem Zwei- Spannungs- Energie-Speicherungs- System besonders vorteilhaft verwirklichen. Alternativ oder ergänzend ist nach einem weiteren Ausgestaltungsmerkmal der vorliegenden Erfindung vorgesehen, daß die intelligente Umschaltregelung des Energieversorgungssystems eine Anzahl von Relais- Schaltelementen umfaßt.

Es empfiehlt sich nach einem weiteren Ausgestaltungsmerkmal der vorliegenden Erfindung, daß die intelligente Umschaltregelung des Energieversorgungssystems zur Beschaltung der ersten 12 V- Batterie als erster 12 V - Teil zwischen Erde und 12 V ausgebildet ist. Bei einer davon abweichenden Ausführungsform der vorliegenden Erfindung ist vorgesehen, daß die intelligente Umschaltregelung des Energieversorgungssystems zur Beschaltung der zweiten 12 V- Batterie als erster 12 V - Teil zwischen Erde und 12 V ausgebildet ist, bei einer weiteren davon abweichenden dritten Ausführungsform der vorliegenden Erfindung ist vorgesehen, daß die intelligente Umschaltregelung des Energieversorgungssystems zur Beschaltung der dritten 12 V- Batterie als erster 12 V - Teil zwischen Erde und 12 V ausgebildet ist. Über diese jeweils als erster 12 V - Teil zwischen Erde und 12 V beschaltete erste, zweite oder dritte 12 V- Batterie wird dabei jeweils die 12V-Energie- Speicherungs- Funktionalität bereitgestellt.

Nach einem weiteren Ausgestaltungsmerkmal der vorliegenden Erfindung ist vorgesehen, daß die intelligente Umschaltregelung des Energieversorgungssystems zum wechselweisen Schalten der drei 12 V- Batterien der 36 V- Batterie ein Batterie-Anzeige- und Überwachungs-System umfaßt, welches das wechselweise Schalten der drei 12 V- Batterien in Abhängigkeit von deren Ladezustand steuert. Zweckmäßig ist es dabei, daß die intelligente Umschaltregelung des Energieversorgungssystems eine derart kurze Schaltzeit aufweist, daß das Batterie-Anzeige- und Überwachungs-System für ein wechselweises Schalten über Nacht zum Balance- Ausgleich der Energiespeicherung nicht benötigt wird.

Es empfiehlt sich nach einem weiteren Ausgestaltungsmerkmal der vorliegenden Erfindung, daß die intelligente Umschaltregelung des Energieversorgungssystems zur Vermeidung von Spannungsschwankungen auf der 14 V- Seite des Systems eine sehr kurze Schaltzeit aufweist. Alternativ oder ergänzend ist nach einem weiteren Ausgestaltungsmerkmal der vorliegenden Erfindung vorgesehen, daß die intelligente Umschaltregelung des Energieversorgungssystems zur Vermeidung von Spannungsschwankungen auf der 14 V- Seite des Systems eine Einrichtung zur PWM- Anpassung umfaßt. Es werden dadurch die beim Umschalten zwischen den einzelnen 12 V- Teilen entstehenden Spannungsabfälle vermieden, wobei die Strategie für das Umschalten auf den von dem Batterie-Anzeige- und Überwachungs-System erhaltenen Informationen basiert.

Nach einem weiteren Ausgestaltungsmerkmal der vorliegenden Erfindung ist vorgesehen, daß die intelligente Umschaltregelung des Energieversorgungssystems bei Fahrzeugstillstand und zur Unterstützung eines Kaltstartes z.B. von großen (Diesel-) Motoren zur Parallel- Schaltung der ersten, zweiten und dritten 12 V-Batterie ausgebildet ist. Durch eine derartige Ausgestaltung werden verschiedene Vorteile erzielt. Zum einen wird durch die Parallelschaltung der drei 12 V- Batterien die Batteriekapazität auf dem 12 V- Niveau gedrittelt und ermöglicht dadurch einen längeren Fahrzeugstillstand z.B. an Flughäfen. Ein weiterer Vorteil besteht darin, daß in diesem Betriebsmodus des Systems während Fahrzeugstillstand die drei verschiedenen 12 V- Teile in der Lage sein werden, ihren Ladezustand über Nacht durch Ladungsumschaltung zu balancieren und sich dadurch auf den gleichen Ladezustand zu bringen. Das beinhaltet, daß bei ausreichend hoher Schaltfrequenz ein Batterie-Anzeige- und Überwachungs-System zum Balance- Ausgleich der Energiespeicherung über Nacht nicht benötigt wird. Das Ergebnis ist eine gleichverteilte Ladungsausgabe der nach einem weiteren Ausgestaltungsmerkmal der vorliegenden Erfindung vorzugsweise identisch ausbildeten drei wechselweise schaltbaren 12 V- Batterien der 36 V- Batterie des Energieversorgungssystems. Diese Parallelschaltung der ersten, zweiten und dritten 12 V- Batterie wird aber auch zur Unterstützung eines Kaltstartes z.B. von großen (Diesel-) Motoren verwendet, und zwar insbesondere im Winter, wenn die elektrische 42 V Einheit wegen hoher Motorreibung nicht in der Lage ist, den Motor zu starten. Sobald der Motor gestartet ist, wird die Energie- Speicherungs- Einrichtung sofort zu ihrer 12/36 V- Anwendung umschalten.

Es empfiehlt sich nach einem letzten Merkmal der vorliegenden Erfindung, daß die drei wechselweise schaltbaren 12 V- Batterien der 36 V- Batterie des Energieversorgungssystems in zwei oder drei separaten Gehäusen angeordnet sind. Es ergibt sich durch die erfindungsgemäße Anordnung insgesamt der Vorteil einer höheren Batterie- Unterbringungs - Flexibilität. Weil es bei heutigen Fahrzeugen immer schwieriger wird, die Batterien in dem Motorraum unterzubringen, ergibt sich das Erfordernis, die Batterien an anderen Stellen zu positionieren. Das erfindungsgemäße Energieversorgungssystem für Fahrzeuge mit einem Zwei-Spannungs- Speicherungs- System ermöglicht es dem Fahrzeughersteller, das Batteriegehäuse neu zu gestalten, wie z. B wie erwähnt in ein, zwei oder drei Gehäuse, um die Batterie an beliebig verfügbaren Räumen unterzubringen. Durch das Aufspalten der 36 V- Batterie z.B. in drei kleinere 12 V- Batterie- Gehäuse wird dabei die Funktionalität des Energie- Speicherungs- Systems nicht beeinflußt, die einzige Bedingung ist, das die Batterien etwa die gleiche Leistung abgeben.

Mit dem erfindungsgemäßen Energieversorgungssystem werden also weitere Vorteile neben den bereits erwähnten des Erreichens einer Kostenreduzierung, der Einsparung von Gewicht, einer Verbesserung der Unterbringungsflexibilität und einer Vermeidung der Verwendung eines Zwei- Spannungs- Ausgangs- Generatoren oder eines 42/12 V- Gleichstromumwandlers, erreicht, die sich wie folgt zusammenfassen lassen:

Durch die parallele Anordnung der drei 12 V- Batterien wird eine sehr gute Versorgung der im ausgeschalteten Zustand verbleibenden 12 V- Ladungen erreicht. Weiterhin wird durch die parallele Anordnung der drei 12 V- Batterien eine sehr hohe Energie- Verfügbarkeit bei 12 V für einen Kaltstart z.B. von großen Dieselmotoren mit einem konventionellen 14 V- Starte r- Motor anstatt einer 42 V-Elektrik- Einrichtung erzielt und außerdem wird die Batterie- Unterbringungs-Flexibilität stark verbessert.

Die Erfindung ist in den Figuren der Zeichnung in mehreren Ausführungsbeispielen dargestellt. Es zeigen:
- Fig. 1: eine schematische Darstellung des dem erfindungsgemäßen Energieversorgungssystem zugrunde liegenden Grundkonzeptes,
- Fig. 2: eine schematische Darstellung des dem erfindungsgemäßen Energieversorgungssystem zugrunde liegenden abgewandelten Grundkonzeptes mit einer Schaltregelung zur Energieverteilung,
- Fig. 3: eine schematische Darstellung des dem erfindungsgemäßen Energieversorgungssystem zugrunde liegenden endgültigen Grundkonzeptes,
- Fig. 4: eine schematische Darstellung einer Schaltungsanordnung einer intelligenten Umschaltregelung des erfindungsgemäßen Energieversorgungssystems es in einer ersten Ausführungsform,
- Fig. 5: eine schematische Darstellung der Schaltungsanordnung der intelligenten Umschaltregelung des erfindungsgemäßen Energieversorgungssystems es in einer zweiten Ausführungsform,
- Fig. 6: eine schematische Darstellung der Schaltungsanordnung der intelligenten Umschaltregelung des erfindungsgemäßen Energieversorgungssystems in einer dritten Ausführungsform,
- Fig. 7: eine Darstellung der Schaltzustände in der Schaltungsanordnung der Umschaltregelung des erfindungsgemäßen Energieversorgungssystems gemäß den Fig. 4, 5 und 6,
- Fig. 8: eine schematische Darstellung der Einrichtung zur PWM- Anpassung für die intelligente Umschaltregelung des erfindungsgemäßen Energieversorgungssystems,
- Fig. 9: eine schematische Darstellung der Schaltungsanordnung der intelligenten Umschaltregelung des erfindungsgemäßen Energieversorgungssystems in einer vierten Ausführungsform,
- Fig. 10: eine schematische Darstellung der Schaltzustände in der Schaltungsanordnung der Umschaltregelung des erfindungsgemäßen Energieversorgungssystems gemäß Fig. 9,
- Fig. 11: eine schematische Darstellung eines abgewandelten Batterie-Unterbringungs- Konzeptes,
- Fig. 12: eine schematische Draufsicht auf ein Fahrzeug mit einer möglichen Batterie- Unterbringungs- Anordnung des erfindungsgemäßen Energieversorgungssystems.

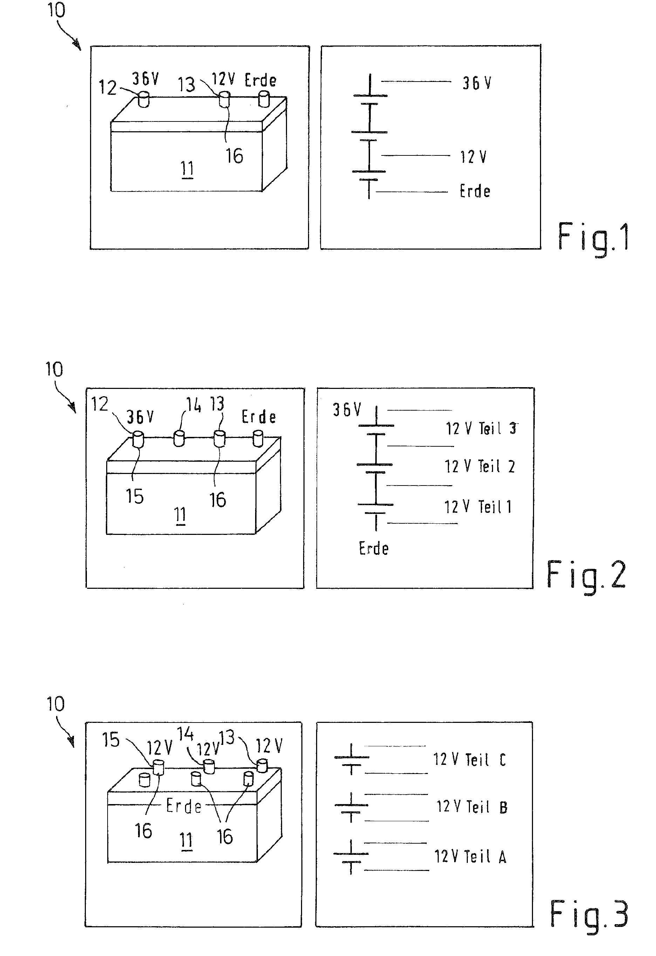

Das erfindungsgemäße Energieversorgungssystem ist generell mit 10 bezeichnet. Es ist dazu das Energieversorgungssystem 10 in den Figuren 1 bis 3 der Zeichnung in mehreren, noch zu erläuternden Grundkonzepten dargestellt. Das Energieversorgungssystem 10 ist vorgesehen für Fahrzeuge mit einem Zwei-Spannungs- Speicherungs- System, umfassend ein mit 11 bezeichnetes elektrisches 14/42 V Zwei- Sp annungs- System mit einer im wesentlichen drei wechselweise schaltbare 12- Volt Batterien 13,14,15 aufweisenden 36 V-Batterie 12, von denen eine als erster 12- Volt - Teil 16 zwischen Erde und 12 V schaltbar ist, und mit jeweiligen Einrichtungen zur Energiespeicherung für das 14 V- und das 42 V-System, wobei die 36 V-Batterie 12 die Einrichtung zur Energiespeicherung für das 12 V- System und die Einrichtung zur Energiespeicherung für das 42 V- System umfaßt.

Es sind dazu verschiedene Energieversorgungssysteme 10 für Fahrzeuge mit einem Zwei- Spannungs- Speicherungs- System bekannt, die ein elektrisches 14/42 V Zwei-Spannungs- System 11 umfassen. Es sind die bekannten elektrischen 14/42 V- Zwei-Spannungs- Systeme entwickelt worden, um die Überführung von einem konventionellen elektrischen 14 V- System zu einem elektrischen System mit einem 42 V- Niveau zu erleichtern. Ein Nachteil der Einführung eines elektrischen Energieversorgungssystems 10 mit einem Zwei- Spannungs- System ist der Bedarf an mehr als einer Einrichtung zur Energiespeicherung, um die Energie für hohe Energie- Übergangs- Ladungen zu speichern.

In einem konventionellen elektrischen 14 V- System wird eine einzelne 12 V- Batterie als Einrichtung zur Energiespeicherung verwendet. In vielen Anwendungen für elektrische 14/42 V- Zwei - Spannungs - Systeme ist die Verwendung von zwei separaten Einrichtungen zur Energiespeicherung erforderlich, um Anordnungen mit Eigenschaften von zwei Batterien zu ermöglichen. Ausgehend von diesen bekannten Lösungen ist es wünschenswert, ein Energieversorgungssystem 10 für Fahrzeuge mit einem Zwei- Spannungs - Speicherungs - System bereitzustellen, mit dem eine Kostenreduzierung erreicht wird, Gewicht gespart wird, die Unterbringungsflexibilität verbessert und eine kurzzeitige Ausgabe hoher Energie für den Startvorgang bereitgestellt wird. Die gewünschte Lösung soll dabei möglichst ohne die Verwendung eines Zwei- Spannungs- Ausgangs- Generatoren oder eines 42/12 V-Gleichstromumwandlers erfolgen, abhängig von der gesamten elektrischen Ladungsanforderung auf der 14 V- Seite des Systems.

Das Grundkonzept dazu ist die Verwendung einer einzelnen Batterie 12, die es ermöglicht, eine für einen Startvorgang erforderliche Energie unter allen Umständen bereitzustellen. In Ergänzung dazu soll zu einer parallelen Anordnung umgeschaltet werden können, wenn eine hohe Batteriekapazität erforderlich ist. Die bekannten Systeme sehen dieses Konzept allerdings nicht bei einer Lösung mit einem Zwei-Spannungs- Speicherungs- System vor.

Die der vorliegenden Erfindung zugrunde liegende Grundidee ist, eine elektrische 12 V- Energie- Speicherung und Speicher- Funktionalität in eine 36 V- Haupt-Einrichtung zur Energiespeicherung einzubeziehen. Durch ein solches Vorgehen würde die Notwendigkeit einer separaten 12 V- Batterie entfallen und dadurch der erforderliche Unterbringungsraum entfallen und dadurch Gewicht gespart. Idealerweise würde der Unterbringungsraumbedarf einer 36 V- Einrichtung zur Energiespeicherung im Vergleich mit dem Unterbringungsraumbedarf einer 36 V-Batterie 12 in einer Zwei- Batterien - Anordnung gleichbleiben. Weil eine 36 V-Batterie 12 als drei in Serie geschaltete 12 V- Batterien 13,14,15 angesehen werden kann, könnte die 12 V- Energie- Speicher- Funktion theoretisch durch das Hinzufügen eines dritten Batteriepoles realisiert werden. Diese Grundidee ist in der Fig. 1 der Zeichnung schematisch dargestellt, es ist dazu das erfindungsgemäße Energieversorgungssystem 10 schematisch in einem Grundentwurf dargestellt.

Bei der Ausbildung einer derartigen Anordnung ergeben sich allerdings zwei Probleme. Zum einen werden Differenzen in den Ladungszuständen über die verschiedenen Zellen der Batterie 12 auftreten, weil die Batterie 12 auf einem 42 V-Niveau aufgeladen wird und zusätzlich Energie von den Zellen entzogen wird, die dem 12 V- Teil der elektrischen Energie- Speicherung dessen Funktionalität verleihen. Zum zweiten werden durch dieses zusätzliche Entladen dieser Zellen durch den 14 V- Teil des Energienetzes (wenn kein Gleichstromumwandler verfügbar ist) die Batteriezellen ein ungleiches Arbeiten erfahren und sich dadurch nach einer Weile eine ungleiche Alterungsverteilung ergeben. Da dies die allgemeine Lebensdauererwartung der Batterie verkürzen wird, wird dadurch eine Veränderung in diesem Ansatz für das elektrische Zwei- Spannungs - Energie - Speicherungs - System erforderlich.

Um nun eine Alterung nur eines Teiles der Zellen der 36 V- Batterie 12 zu vermeiden, ist es erforderlich, auch das Entziehen von elektrischer Energie aus der Batterie 12 über die verschiedenen Zellen zu verteilen. Es wird deshalb nachfolgend die 36 V- Batterie 12 als drei separate 12 V- Teile in einem gemeinsamen Gehäuse angesehen. Dabei ist zu erreichen, sicherzustellen, daß jeder 12 V- Teil wechselweise geschaltet wird, um die 12 V- Energie - Speicher - Funktionalität zusätzlich als Teil des elektrischen 36 V- Energie- Speicherungs- Systems auszubilden. Es ist dazu in der Fig. 2 der Zeichnung diese abgewandelte Grundidee mit einer Schaltregelung zur Energieverteilung dargestellt. In Kombination mit einer intelligenten Umschaltregelung 17, die z.B. über eine Verwendung von MOS-FET-Schaltelementen 18 oder Relais- Schaltelementen 19 realisiert werden kann, ist es nun möglich, die 36 V- Batterie 12 als eine elektrische Energie- Speicher - Einrichtung für den 42 V- und den 14 V- Teil des elektrischen Systems des Fahrzeuges zu verwenden, ohne Ladungsdifferenzen oder Alterungsprobleme zu haben. Es kann dabei über ein Batterie-Anzeige- und Überwachungs-System sichergestellt werden, daß das Umschalten zwischen den drei Batterieteilen 13,14,15 in Abhängigkeit von deren Ladezustand gesteuert wird.

Allerdings gestaltet sich eine derartige Anordnung bei der Anwendung von elektrischen Zwei- Spannungs - Energie - Speicherungs- Systemen innerhalb eines elektrischen Zwei- Spannungs - Systems schwierig. Der Grund dafür liegt in der gemeinsamen Erdung, die in den heutigen Fahrzeugen vorliegt. Bei dieser Konfiguration wird nämlich die 36 V- Batterie - Erdung mit dem Fahrzeugfahrwerk verbunden. Wenn die elektrische 12 V- Energie- Speicherungs- Funktionalität hier bei dem zweiten 12 V- Teil der 36 V- Batterie 12 (24 V- 12 V) vorgesehen würde, würde der erste 12 V- Teil der 36 V- Batterie 12 kurz geschlossen. Dies erfordert eine Kabelbaum- Anordnung für jede 14 V- Ladung, weil diese nicht direkt mit dem Fahrzeugfahrwerk verbunden werden kann. Eine solche Lösung ist aus Kosten- und Einheitlichkeitsgründen nicht erwünscht, es ist vielmehr eine Verbesserung dieser Lösungsmöglichkeit wünschenswert.

Es sollen also mit der gewünschten Lösung insbesondere die erwähnten Ladungdifferenzen und Alterungsprobleme vermieden werden, weiterhin soll insbesondere das zuvor beschriebene Kurzschlußproblem verhindert werden.

Dazu ist erfindungsgemäß vorgesehen, daß das Energieversorgungssystem 10 eine intelligente Umschaltregelung 17 zur Beschaltung jeder 12 V- Batterie 13,14,15 der 36 V- Batterie 12 als mit 16 bezeichneter erster 12 V- Teil zwischen Erde und 12 V umfaßt. Es ist dazu in der Fig. 3 der Zeichnung dieses endgültige Grundkonzept für das erfindungsgemäße Energieversorgungssystem 10 schematisch dargestellt. Dabei ist das erfindungsgemäße Energieversorgungssystem 10 schematisch mit einer Umschaltregelung zur Energieverteilung mit einer gemeinsamen Erdung dargestellt. Auf diese Weise wird erstmalig die Möglichkeit geschaffen, ein Energieversorgungssystem 10 bereitzustellen, daß unter Vermeidung der zuvor beschriebenen Nachteile mit einem Zwei- Spannungs- Energie- Speicherungs-System innerhalb eines elektrischen Zwei- Spannungs- Systeme ausgestattet ist. Es werden dabei insbesondere die erwähnten Ladungsdifferenzen und Alterungsprobleme sowie auch das beschriebene Kurzschlußproblem vermieden. Die erfindungsgemäße Anordnung ist auch einfach und kostengünstig herstellbar, und weist eine hohe Zuverlässigkeit und Lebensdauer auf.

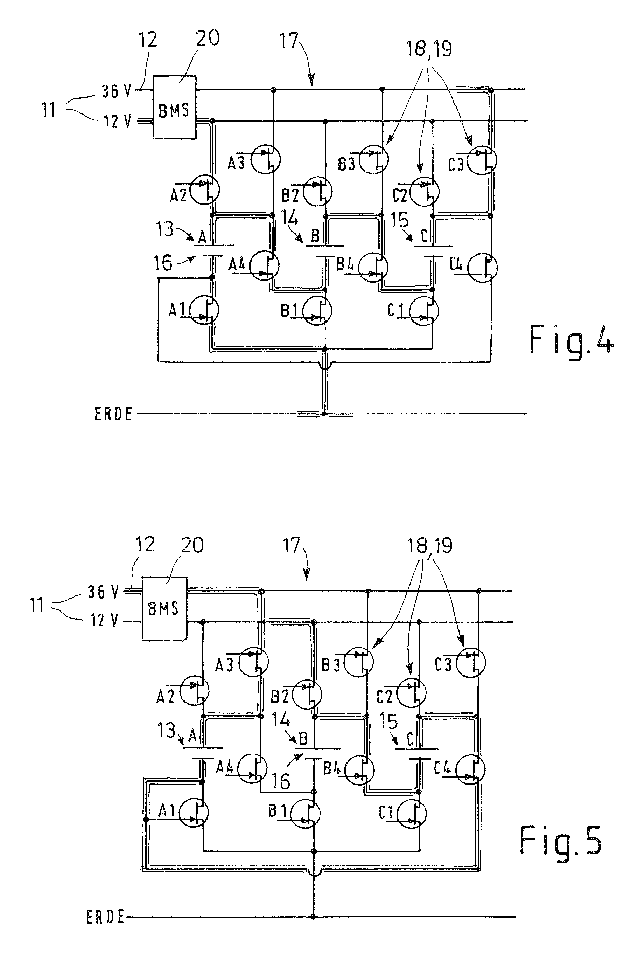

Die intelligente Umschaltregelung 17 des Energieversorgungssystems 10 kann, siehe dazu z.B. die noch zu beschreibenden Ausführungsformen gemäß den Fig. 4 bis 6 der Zeichnung, eine Anzahl von Mehrfach- MOS - FET- Schaltelementen 18 und/ oder Relais- Schaltelementen 19 umfassen, über die sich das erfindungsgemäße Energieversorgungssystem 10 mit einem Zwei- Spannungs-Energie- Speicherungs- System besonders vorteilhaft verwirklichen läßt.

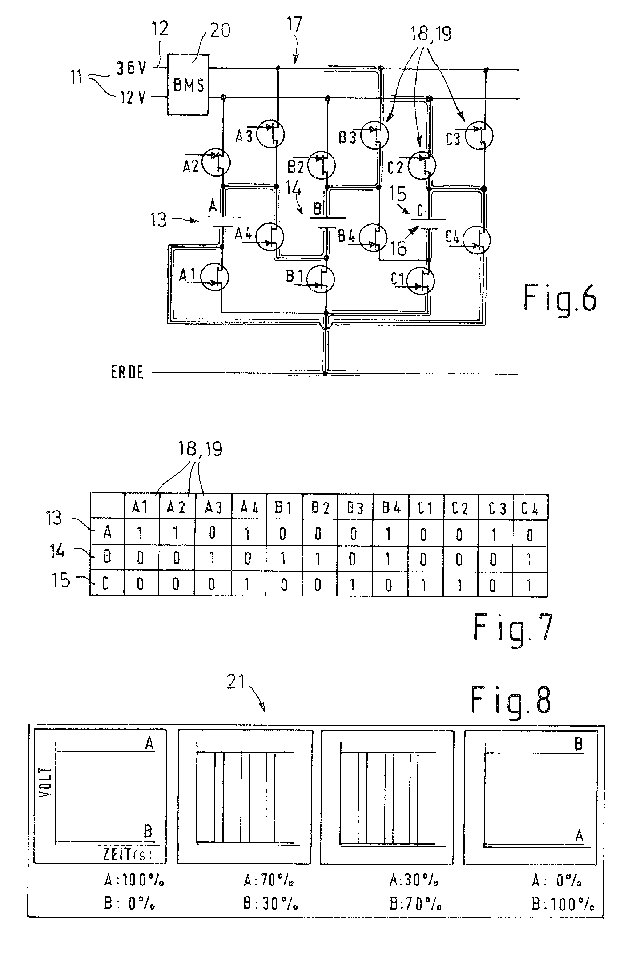

Bei der Ausführungsform gemäß der Fig. 4 der Zeichnung ist nun vorgesehen, daß die intelligente Umschaltregelung 17 des Energieversorgungssystems 10 zur Beschaltung der ersten 12 V- Batterie 13 als erster 12 V - Teil 16 zwischen Erde und 12 V ausgebildet ist. Über diese als erster 12 V - Teil 16 zwischen Erde und 12 V beschaltete erste 12 V- Batterie 13 wird dabei also die 12 V- Energie- Speicherungs-Funktionalität bereitgestellt. Es wird dabei, siehe auch die dazugehörigen Schaltzustände in der Fig. 7, die erste 12 V- Batterie 13 über die Mehrfach- MOS-FET- Schaltelementen 18 und/ oder Relais- Schaltelementen 19 A1 und A2, nachfolgend nur noch mit Schaltelemente A1, A2, ...... bezeichnet, mit der Erde verbunden, während, ausgehend von dem 36 V- Niveau, über Schaltelement C3 die dritte 12 V- Batterie 15 beschaltet wird, weiterhin über Schaltelement B4 die zweite 12 V- Batterie 14 und dann über Schaltelement A4 eine Verbindung zur ersten 12 V-Batterie 13 erfolgt. Alle anderen Schaltelemente A3, B2, B3, C2, C4, C1 und B1 befinden sich bei dieser Ausführungsform im Schaltzustand 0.

Bei der Ausführungsform gemäß der Fig. 5 der Zeichnung ist vorgesehen, daß die intelligente Umschaltregelung 17 des Energieversorgungssystems 10 zur Beschaltung der zweiten 12 V- Batterie 14 als erster 12 V - Teil 16 zwischen Erde und 12 V ausgebildet ist. Über diese als erster 12 V - Teil 16 zwischen Erde und 12 V beschaltete zweite 12 V- Batterie 14 wird also hier die 12 V- Energie-Speicherungs- Funktionalität bereitgestellt. Es wird dabei, siehe auch die dazugehörigen Schaltzustände in der Fig. 7, die zweite 12 V- Batterie 14 über die Schaltelemente B2 und B1 mit der Erde verbunden, während, ausgehend von dem 36 V- Niveau, über Schaltelement A3 die erste 12 V- Batterie 13 beschaltet wird, weiterhin über Schaltelement C4 die dritte 12 V- Batterie 15 und dann über Schaltelement B4 eine Verbindung zur zweiten 12 V- Batterie 14 erfolgt. Alle anderen Schaltelemente A2, B3, C2, C3, C1, A4 und A1 befinden sich bei dieser Ausführungsform im Schaltzustand 0.

Bei der Ausführungsform gemäß der Fig. 6 der Zeichnung ist vorgesehen, daß die intelligente Umschaltregelung 17 des Energieversorgungssystems 10 zur Beschaltung der dritten 12 V- Batterie 15 als erster 12 V - Teil 16 zwischen Erde und 12 V ausgebildet ist. Über diese als erster 12 V - Teil 16 zwischen Erde und 12 V beschaltete dritte 12 V- Batterie 15 wird also hier die 12 V- Energie- Speicherungs-Funktionalität bereitgestellt. Es wird dabei, siehe wieder die dazugehörigen Schaltzustände in der Fig. 7, die dritte 12 V- Batterie 15 über die Schaltelemente C2 und C1 mit der Erde verbunden, während, ausgehend von dem 36 V- Niveau, über Schaltelement B3 die zweite 12 V- Batterie 14 beschaltet wird, weiterhin über Schaltelement A4 die erste 12 V- Batterie 13 und dann über Schaltelement C4 eine Verbindung zur dritten 12 V- Batterie 15 erfolgt. Alle anderen Schaltelemente A2, A3, B2, C3, B4, B1 und A1 befinden sich bei dieser Ausführungsform im Schaltzustand 0.

Die intelligente Umschaltregelung 17 des Energieversorgungssystems 10 umfaßt, siehe dazu insb. wieder die Fig. 4, 5 oder 6 der Zeichnung, zum wechselweisen Schalten der drei 12 V- Batterien 13,14,15 der 36 V- Batterie 12 ein Batterie-Anzeige- und Überwachungs-System 20, welches das wechselweise Schalten der drei 12 V- Batterien 13,14,15 in Abhängigkeit von deren Ladezustand steuert. Die intelligente Umschaltregelung 17 des Energieversorgungssystems 10 kann dabei eine derart hohe Schaltfrequenz aufweisen, daß das Batterie-Anzeige- und Überwachungs-System 20 für ein wechselweises Schalten über Nacht zum Balance-Ausgleich der Energiespeicherung nicht benötigt wird.

Die intelligente Umschaltregelung 17 des Energieversorgungssystems 10 kann zur Vermeidung von Spannungsschwankungen auf der 14 V- Seite des Systems insb. bei bestimmten Verbraucheranforderungen (z.B. Beleuchtung, zusätzliches Gebläse im Innenraum etc.) eine sehr kurze Schaltzeit aufweisen. Alternativ oder ergänzend kann die intelligente Umschaltregelung 17 des Energieversorgungssystems 10 zur Vermeidung von Spannungsschwankungen auf der 14 V- Seite des Systems eine Einrichtung 21 zur PWM- Anpassung umfassen. Es werden dadurch die beim Umschalten zwischen den einzelnen 12 V- Teilen 13,14,15 entstehenden Spannungsabfälle vermieden, wobei die Strategie für das Umschalten auf den von dem Batterie-Anzeige- und Überwachungs-System 20 erhaltenen Informationen basiert. Es ist dazu in der Fig. 8 der Zeichnung die Einrichtung 21 zur PWM-Anpassung für die intelligente Umschaltregelung 17 des erfindungsgemäßen Energieversorgungssystems 10 schematisch dargestellt, wobei die Pulsmuster durch die aufgegebenen Schaltfrequenzen für die Schaltelemente A und B in der linken Darstellung 100 % und 0 % betragen, in der zweiten Darstellung 70 % und 30 %, in der dritten Darstellung 30 % und 70 % und in der vierten Darstellung 0 % und 100 %.

Bei einem Fahrzeug sind in der Regel bei einem Fahrzeugstillstand alle verbleibenden Ladungen auf der 14 V- Seite des Fahrzeug- Elektrik- Systems. Diese verbleibenden Ladungen bestehen in der Hauptsache aus Steuerelementen, Alarmanlagen und entfernt gesteuerten Türverriegelungen. Es ist deshalb nach einem weiteren Ausgestaltungsmerkmal der vorliegenden Erfindung vorgesehen, daß die intelligente Umschaltregelung 17 des Energieversorgungssystems 10 bei Fahrzeugstillstand und zur Unterstützung eines Kaltstartes z.B. von großen (Diesel-) Motoren zur Parallel- Schaltung der ersten, zweiten und dritten 12 V- Batterie 13,14,15 ausgebildet ist. Durch eine derartige Ausgestaltung werden verschiedene Vorteile erzielt. Zum einen wird durch die Parallelschaltung der drei 12 V- Batterien 13,14,15 die Batteriekapazität auf dem 12 V- Niveau gedrittelt und ermöglicht dadurch einen längeren Fahrzeugstillstand z.B. an Flughäfen. Ein weiterer Vorteil besteht darin, daß in diesem Betriebsmodus des Systems während Fahrzeugstillstand die drei verschiedenen 12 V- Teile 13,14,15 in der Lage sein werden, ihren Ladezustand über Nacht durch Ladungsumschaltung zu balancieren und sich dadurch auf den gleichen Ladezustand zu bringen. Das beinhaltet, daß bei ausreichend hoher Schaltfrequenz ein Batterie-Anzeige- und Überwachungs-System 20 zum Balance- Ausgleich der Energiespeicherung über Nacht nicht benötigt wird. Das Ergebnis ist eine gleichverteilte Ladungsausgabe der nach einem weiteren Ausgestaltungsmerkmal der vorliegenden Erfindung vorzugsweise identisch ausbildeten drei wechselweise schaltbaren 12 V- Batterien 13,14,15 der 36 V-Batterie 12 des Energieversorgungssystems 10. Diese Parallelschaltung der ersten, zweiten und dritten 12 V- Batterie 13,14,15 wird aber auch zur Unterstützung eines Kaltstartes z.B. von großen (Diesel-) Motoren verwendet, und zwar insbesondere im Winter, wenn die elektrische 42 V Einheit wegen hoher Motorreibung nicht in der Lage ist, den Motor zu starten. Sobald der Motor gestartet ist, wird die Energie-Speicherungs- Einrichtung sofort zu ihrer 12/36 V- Anwendung umschalten.

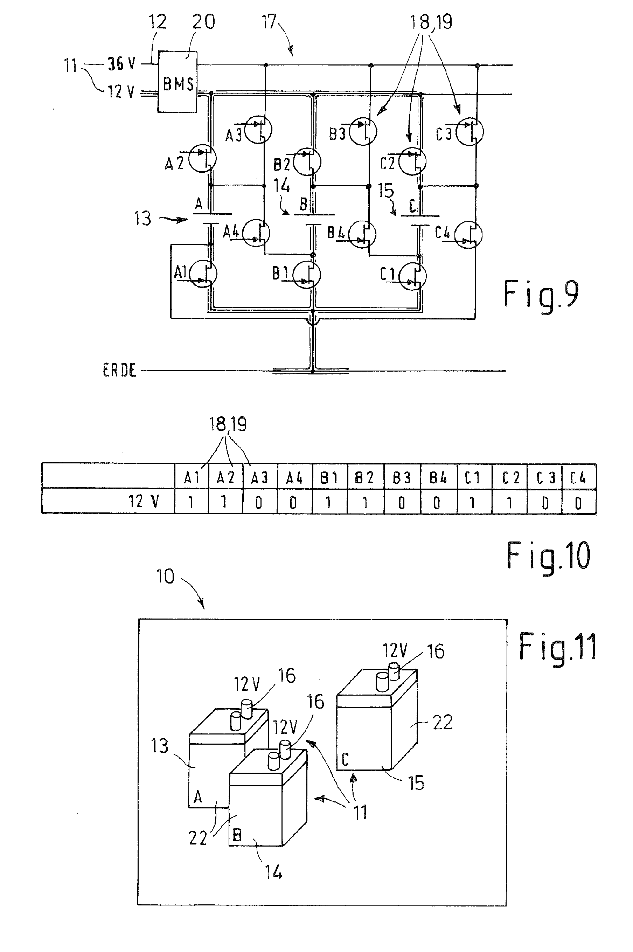

Die Fig. 9 der Zeichnung zeigt dazu schematisch die Schaltungsanordnung der intelligenten Umschaltregelung 17 des erfindungsgemäßen Energieversorgungssystems 10 dieser Ausführungsform, die Fig. 10 die dazugehörigen Schaltzustände. Es werden in diesem Schaltbild in paralleler Anordnung die drei 12 V- Batterien 13,14,15 mit der Erde verbunden, und zwar die erste 12 V- Batterie 13 über die Schaltelemente A2 und A1, die zweite 12 V- Batterie 14 über die Schaltelemente B2 und B1 und die dritte 12 V- Batterie 15 über die Schaltelemente C2 und C1. Alle anderen Schaltelemente A3, A4, B3, B4, C3 und C4 befinden sich im Schaltzustand 0. Bei dieser Ausführungsform kann im Falle kleiner Dieselmotoren oder Ottomotoren der eigentliche Anlassermotor in Fortfall kommen.

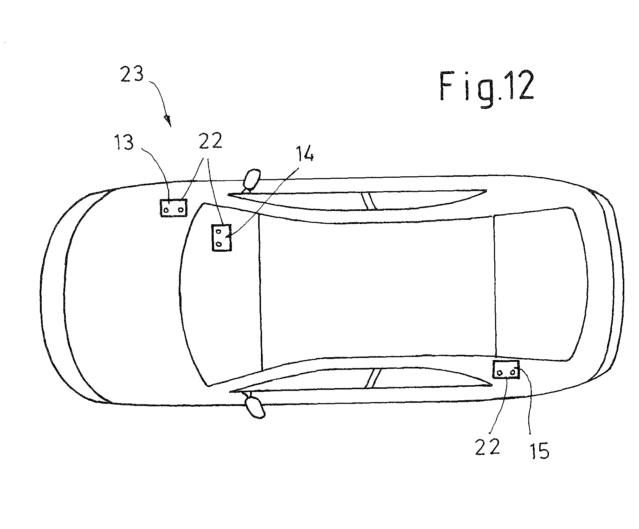

Bei einer weiteren Ausführungsform des erfindungsgemäßen Energieversorgungssystems 10 ist vorgesehen, daß die drei wechselweise schaltbaren 12 V- Batterien 13,14,15 der 36 V- Batterie 12 des Energieversorgungssystems 10 in zwei oder drei separaten Gehäusen 22 angeordnet sind, siehe dazu die Fig. 11 der Zeichnung mit einer dreiteiligen Ausführungsform. Es ergibt sich durch die erfindungsgemäße Anordnung insgesamt der Vorteil einer höheren Batterie- Unterbringungs- Flexibilität. Weil es bei heutigen Fahrzeugen immer schwieriger wird, die Batterien in dem Motorraum unterzubringen, ergibt sich das Erfordernis, die Batterien an anderen Stellen zu positionieren. Das erfindungsgemäße Energieversorgungssystem 10 für Fahrzeuge mit einem Zwei-Spannungs- Speicherungs- System ermöglicht es dem Fahrzeughersteller, das Batteriegehäuse neu zu gestalten, wie z.B wie erwähnt in ein, zwei oder drei Gehäuse, um die Batterie an beliebig verfügbaren Räumen unterzubringen. Durch das Aufspalten der 36 V- Batterie 12 z.B. in drei kleinere 12 V- Batterie- Gehäuse 22 wird dabei die Funktionalität des Energie- Speicherungs- Systems nicht beeinflußt, die einzige Bedingung ist, das die Batterien etwa die gleiche Leistung abgeben. Es ist dazu in der Fig. 12 der Zeichnung ein Beispiel für die Unterbringung einer in drei kleinere 12 V- Batterie- Gehäuse 22 aufgespalteten 36 V- Batterie in einem Fahrzeug 23 mit einem elektrischen Zwei- Spannungs- System gezeigt, es ist dazu ein Fahrzeug mit einer möglichen Batterie- Unterbringungs- Anordnung des erfindungsgemäßen Energieversorgungssystems 10 in Draufsicht dargestellt, wobei die drei kleineren 12 V- Batterie- Gehäuse 22 im Motorraum, im Innenraum und im Kofferraum des Fahrzeuges angeordnet sind.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insb. die intelligente Umschaltregelung 17 eine von den dargestellten Ausführungsformen abweichende Ausbildung bzw. Beschaltung aufweisen, weiterhin denkbar sind insb. auch abweichende Ausbildungen und Anordnungen der einzelnen 12 V- Batterien 13,14,15 bzw. von deren Gehäusen 22.

### BEZUGSZEICHENLISTE

- 10: Energieversorgungssystem
- 11: 14/42 V- Zwei- Spannungs- System (von 10)
- 12: 36 V- Batterie
- 13: erste 12 V- Batterie
- 14: zweite 12 V- Batterie
- 15: dritte 12 V- Batterie
- 16: erster 12 V- Teil zwischen Erde und 12 V
- 17: intelligente Umschaltregelung (von 10)
- 18: MOS-FET- Schaltelement
- 19: Relais- Schaltelement
- 20: Batterie- Anzeige- System
- 21: Einrichtung zur PWM- Anpassung
- 22: separates Gehäuse (von 13,14,15)
- 23: Fahrzeug

## Patentansprüche

1. Energieversorgungssystem (10) für Fahrzeuge mit einem Zwei- Spannungs - Speicherungs- System, umfassend ein elektrisches 14/42 V Zwei- Spannungs-System (11) mit einer im wesentlichen drei wechselweise schaltbare 12- Volt Batterien (13,14,15) aufweisenden 36 V-Batterie (12), von denen eine als erster 12- Volt - Teil (16) zwischen Erde und 12 V schaltbar ist, und mit jeweiligen Einrichtungen zur Energiespeicherung für das 14 V- und das 42 V-System, wobei die 36 V-Batterie (12) die Einrichtung zur Energiespeicherung für das 12 V- System und die Einrichtung zur Energiespeicherung für das 42 V- System umfaßt,
**dadurch gekennzeichnet, daß**
das Energieversorgungssystem (10) eine intelligente Umschaltregelung (17) zur Beschaltung jeder 12 V- Batterie (13,14,15) der 36 V- Batterie (12) als erster 12 V- Teil (16) zwischen Erde und 12 V umfaßt.

2. Energieversorgungssystem nach Anspruch 1,
**dadurch gekennzeichnet, daß**
die intelligente Umschaltregelung (17) des Energieversorgungssystems (10) eine Anzahl von Mehrfach- MOS- FET- Schaltelementen (18) umfaßt.

3. Energieversorgungssystem nach Anspruch 1 oder 2,
**dadurch gekennzeichnet, daß**
die intelligente Umschaltregelung (17) des Energieversorgungssystems (10) eine Anzahl von Relais- Schaltelementen (19) umfaßt.

4. Energieversorgungssystem nach einem der Ansprüche 1 bis 3,
**dadurch gekennzeichnet, daß**
die intelligente Umschaltregelung (17) des Energieversorgungssystems (10) zur Beschaltung der ersten 12 V- Batterie (13) als erster 12 V - Teil (16) zwischen Erde und 12 V ausgebildet ist.

5. Energieversorgungssystem nach einem der Ansprüche 1 bis 3,
**dadurch gekennzeichnet, daß**
die intelligente Umschaltregelung (17) des Energieversorgungssystems (10) zur Beschaltung der zweiten 12 V- Batterie (14) als erster 12 V - Teil (16) zwischen Erde und 12 V ausgebildet ist.

6. Energieversorgungssystem nach einem der Ansprüche 1 bis 3,
**dadurch gekennzeichnet, daß**
die intelligente Umschaltregelung (17) des Energieversorgungssystems (10) zur Beschaltung der dritten 12 V- Batterie (15) als erster 12 V - Teil (16) zwischen Erde und 12 V ausgebildet ist.

7. Energieversorgungssystem nach einem der Ansprüche 1 bis 6,
**dadurch gekennzeichnet, daß**
die intelligente Umschaltregelung (17) des Energieversorgungssystems (10) zum wechselweisen Schalten der drei 12 V- Batterien (13,14,15) der 36 V-Batterie (12) ein Batterie-Anzeige- und Überwachungs-System (20) umfaßt, das das wechselweise Schalten der drei 12 V- Batterien (13,14,15) in Abhängigkeit von deren Ladezustand steuert.

8. Energieversorgungssystem nach Anspruch 7,
**dadurch gekennzeichnet, daß**
die intelligente Umschaltregelung (17) des Energieversorgungssystems (10) eine derart hohe Schaltfrequenz aufweist, daß das Batterie-Anzeige- und Überwachungs-System (20) zum Balance- Ausgleich der Energiespeicherung nicht benötigt wird.

9. Energieversorgungssystem nach einem der Ansprüche 1 bis 8,
**dadurch gekennzeichnet, daß**
die intelligente Umschaltregelung (17) des Energieversorgungssystems (10) zur Vermeidung von Spannungsschwankungen auf der 14 V- Seite des Systems eine sehr kurze Schaltzeit aufweist.

10. Energieversorgungssystem nach einem der Ansprüche 1 bis 8,
**dadurch gekennzeichnet, daß**
die intelligente Umschaltregelung (17) des Energieversorgungssystems (10) zur Vermeidung von Spannungsschwankungen auf der 14 V- Seite des Systems eine Einrichtung (21) zur PWM- Anpassung umfaßt.

11. Energieversorgungssystem nach einem der Ansprüche 1 bis 10,
**dadurch gekennzeichnet, daß**
die intelligente Umschaltregelung (17) des Energieversorgungssystems (10) bei Fahrzeugstillstand und zur Unterstützung eines Kaltstartes z.B. von großen (Diesel-) Motoren zur Parallel- Schaltung der ersten, zweiten und dritten 12 V- Batterie (13,14,15) ausgebildet ist.

12. Energieversorgungssystem nach einem der Ansprüche 1 bis 11,
**dadurch gekennzeichnet, daß**
die drei wechselweise schaltbaren 12 V- Batterien (13,14,15) der 36 V-Batterie (12) des Energieversorgungssystems (10) im wesentlichen identisch ausgebildet sind.

13. Energieversorgungssystem nach einem der Ansprüche 1 bis 12,
**dadurch gekennzeichnet, daß**
die drei wechselweise schaltbaren 12 V- Batterien (13,14,15) der 36 V-Batterie (12) des Energieversorgungssystems (10) in zwei oder drei separaten Gehäusen (22) angeordnet sind.
